Europäisches Patentamt

European Patent Office

Office européen des brevets

(11) Veröffentlichungsnummer: **0 175 957**
**A2**

(12) **EUROPÄISCHE PATENTANMELDUNG**

(21) Anmeldenummer: **85110955.3**

(22) Anmeldetag: **30.08.85**

(51) Int. Cl.⁴: **A 01 G 9/22**

(30) Priorität: **25.09.84 DE 3435116**

(43) Veröffentlichungstag der Anmeldung:
**02.04.86 Patentblatt 86/14**

(84) Benannte Vertragsstaaten:
**AT BE CH DE FR GB LI NL SE**

(71) Anmelder: **Deibele GmbH & Co.**
**Kanalstrasse 45**
**D-7336 Uhingen(DE)**

(72) Erfinder: **Deibele, Manfred**
**Hauptstrasse 60**
**D-7335 Eislingen/Fils(DE)**

(74) Vertreter: **Mayer, Friedrich, Dr. et al,**
**Patentanwälte Dr. F. Mayer Dipl.-Phys. G. Frank**
**Westliche 24**
**D-7530 Pforzheim(DE)**

(54) **Vorrichtung zur Schattierung und Wärmedämmung in einem Gewächshaus.**

(57) Die Vorrichtung umfaßt zwei in Falten legbare, den Vegetationsraum wahlweise abdeckende Bahnen, von welchen eine (Schattierbahn 23) luftdurchlässig ist und primär der Schattierung dient und die andere (Isolierbahn 24) luftundurchlässig ist und primär der Wärmedämmung dient. Schattierbahn (23) und Isolierbahn (24) sind auf gemeinsamen Halteelementen (12) geführt und von einer gemeinsamen Antriebseinrichtung (13, 14) gesteuert. Die Zugrohre (18, 19) ) von Schattierbahn (23) und Isolierbahn (24) sind in Abhängigkeit von der Bewegung der Schattierbahn (23) mittels Kupplungen (22) abwechselnd miteinander verbindbar und voneinander lösbar. Dadurch ergibt sich eine wahlweise maximale Wärmedämmung oder eine ideale Schattierung bei tragbarem technischen Aufwand.

FIG. 3

EP 0 175 957 A2

Vorrichtung zur Schattierung und Wärmedämmung in einem Gewächshaus.

Die Erfindung bezieht sich auf eine Vorrichtung entsprechend dem Oberbegriff des Patentanspruches 1.

Üblicherweise (z.B. FR-PS 1 564 910; DE-GM 1 998 736; 8 132 487; DK-PS 103 754; DE-OS 30 13 886) finden luftdurchlässige Schattierbahnen Verwendung, die aus einem Gewebe oder Vlies, zum Beispiel aus Acryl-Gewebe mit einer Lichtdurchlässigkeit von ca. 60% und einer Wärmestrahlungsdurchlässigkeit von ca. 23% oder Polyester-Vlies mit einer Lichtdurchlässigkeit von ca. 20% und einer Wärmestrahlungsdurchlässigkeit von ca. 60%, gefertigt sind. Andererseits soll bei einer guten Isolierbahn eine Lüftungswirkung vermieden werden (vergleiche z.B. "Gartenbautechnische Informationen, bewegliche Energieschirme, Joachim Meyer, Heft 10, 1981, Institut für Technik im Gartenbau und Landwirtschaft, Universität Hannover, Seite 97).

Es hat nicht an Versuchen gefehlt, die sich widerstreitenden Eigenschaften von Schattiersystemen und Wärmedämmsystemen miteinander in Einklang zu bringen.

In diesem Zusammenhang ist auf einen bekannten zweilagigen Energieschirm (Zeitschrift "Zierpflanzenbau mit internationaler Gartentechnik", 19, vom 12. Sept. 1984, XXIV. Jahrgang, Seite 830) und insbesondere auf eine bekannte Vorrichtung der dem Oberbegriff zugrundeliegenden Art (DE- Zeitschrift "Gb + Gw" 34/ 1983, Seite 880) zu verweisen. Bei letzterer Vorrichtung ist sowohl die Schattierbahn als auch die Isolierbahn je mit Hilfe einer gesonderten Antriebsvorrichtung entfaltbar und zusammenfaltbar. Beim Zusammenfalten der Isolierbahn besteht die Gefahr eines Kälteschocks für die Kulturpflanzen infolge der plötzlich in den Vegetationsraum einstürzenden Kaltluft, insbesondere wenn zwischen der Außentemperatur und der Innentemperatur ein verhältnismäßig großer Unterschied besteht.

Der Erfindung liegt die Aufgabe zugrunde, eine Vorrichtung der im Oberbegriff des Patentanspruchs 1 zugrundeliegenden Art mit tragbarem technischen Aufwand so weiterzubilden, daß ein solcher Kälteschock zwangsläufig ausgeschlossen ist.

Diese Aufgabe wird erfindungsgemäß durch die im Kennzeichen des Patentanspruches 1 genannten Merkmale gelöst.

Bei einer solchen Ausbildung wird ein Kälteschock dadurch unmöglich gemacht, daß die bloß passiv steuerbare Isolierbahn nur mit Hilfe der sich entfaltenden Schattierbahn zusammengefaltet werden kann. Dadurch wird der Vegetationsraum für eine vorbestimmbare Zeit von der entfalteten Schattierbahn bedeckt und dabei allmählich durchlüftet.

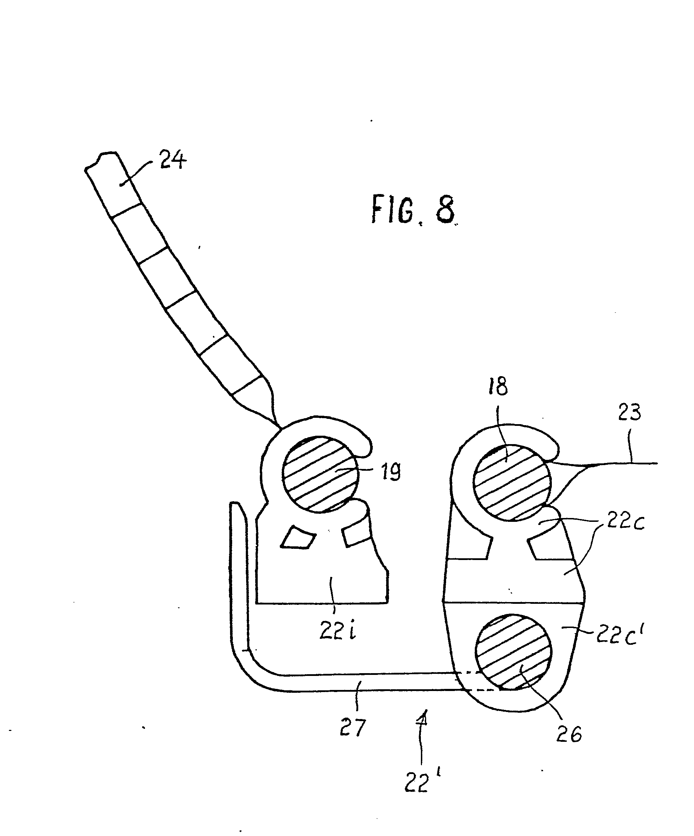

Für die Lösung der Aufgabe kommt es auf die Art der Kupplungen, mit welchen die benachbarten Zugrohre von Isolierbahn und Schattierbahn miteinander verbindbar und voneinander lösbar sind nicht wesentlich an. Die Kupplungsverbindung und die Kupplungslösung kann zum Beispiel mit Hilfe elektromagnetisch betätigbarer Riegel bewirkt sein, wobei der Stromkreis der Elektromagnete willkürlich oder durch Endschalter geschlossen bzw. geöffnet werden kann (Patentanspruch 7). Es können aber auch manuell betätigbare Kupplungen oder Verbindungen Verwendung finden (Fig. 8).

Bei einer Ausbildung entsprechend den Patentansprüchen 8,9 kann der für die Kupplungen erforderliche technische Aufwand extrem klein gehalten werden.

Bei einer einfachen Ausgestaltung nach einem der Patentansprüche 2, 4 als Steckkupplungen kann die Kupplungsverbindung durch Einfahren eines Kupplungszapfens in ein aufnehmendes Kupplungsteil in Abhängigkeit von der in eine Verriegelungsbewegung eines Riegels umsetzbaren Einfahrbewegung bzw. das Lösen der Kupplungsverbindung durch eine Betätigung des Riegels in Abhängigkeit von der Bewegung des Kupplungszapfens herbeigeführt werden.

Nachstehend wird die Erfindung anhand der Zeichnung an einem Ausführungsbeispiel erläutert.

Es zeigen in schematischer Darstellung:

| | |
|---|---|
| Fig. 1 | die in einem Gewächshaus eingebaute Vorrichtung in Draufsicht bei zusammengefalteter Isolierbahn und entfalteter Schattierbahn, |
| Fig. 2 | die Vorrichtung bei zusammengefalteter Schattierbahn und bei entfalteter Isolierbahn, |
| Fig. 3 | die Vorrichtung bei entfalteter Isolierbahn und Schattierbahn, |
| Fig. 4 | die Steckkupplung der Vorrichtung bei Kupplungsverbindung zwischen den Zugrohren von Schattier- und Isolierbahn in Seitenansicht und vergrößerter Darstellung (teilweise im Vertikalschnitt), |
| Fig. 5, 6, 7 | das im Kupplungszapfen der Steckkupplung angeordnete Schrittschaltwerk zur Steuerung des Riegels bei Kupplungsverbindung in aufeinanderfolgenden Schaltpositionen, |
| Fig. 8 | das Beispiel einer manuell betätigbaren Kupplung und |
| Fig. 9-11 | Schematas zur Steuerung der Vorrichtung. |

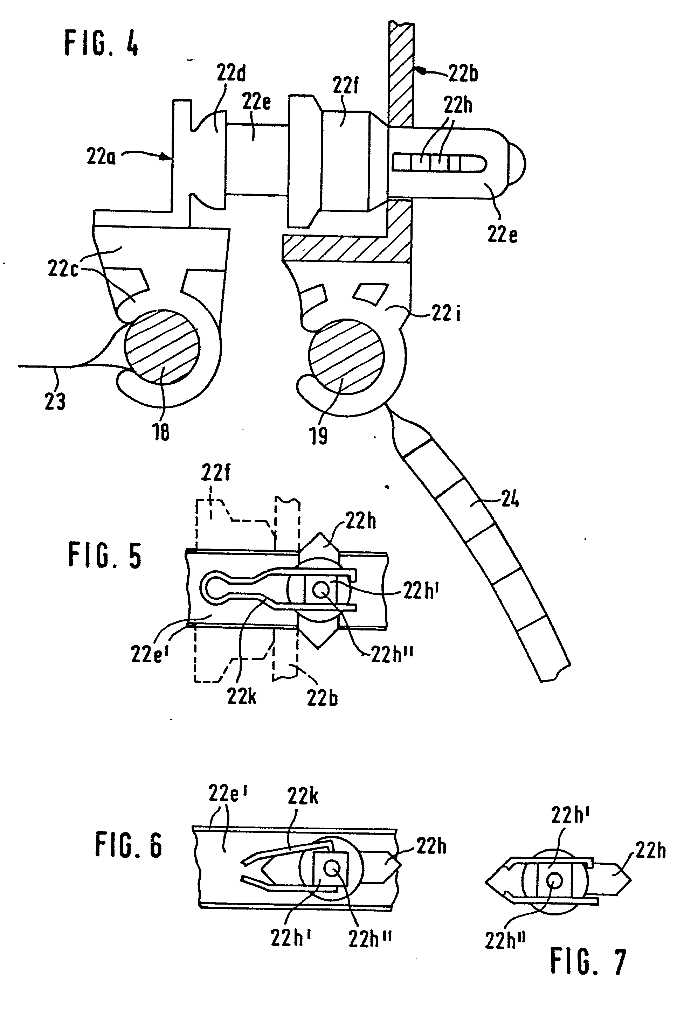

D i e Vorrichtung ermöglicht, wahlweise eine abgestufte Schattierung oder eine Wärmedämmung. Sie umfaßt wenigstens eine folienartige, oder aus plattenartigen Elementen zusammengesetzte, zickzackartig in Falten legbare, den Vegetationsraum abdeckende, luftdurchlässige und primär der Schattierung dienende Schattierbahn 23. Diese ist rückseitig (Anschlußseite) an einem stationären Element des Gewächshauses festgelegt und stirnseitig mit einem Zugrohr 18 armiert. Die Schattierbahn ist an seilartigen Tragelementen 12 mittels Trägerhaken 25 gehaltert und geführt. Sie kann mit Hilfe von seilartigen, je über wenigstens eine Rolle geführten und am Zugrohr mit Hilfe von Verbindungselementen 21 angreifenden Zugseilen 13 zusammengefaltet bzw. entfaltet werden. Der Schattierbahn 23 ist eine ebenfalls in zickzackartigen Falten legbare, von den Tragelementen 12 der Schattierbahn 23 mit Hilfe von Trägerhaken 25 gehalterte und geführte luftundurchlässige oder nahezu luftundurchlässige, primär der Wärmedämmung dienende Isolierbahn 24 zugeordnet. Diese ist ebenfalls rückseitig (Anschlußseite) an einem stationären Element des Gewächshauses festgelegt und stirnseitig mit einem Zugrohr 19 armiert. Die Zugrohre 18, 19 von Schattierbahn 23 und Isolierbahn 24 sind in Abhängigkeit von der Bewegung der Schattierbahn 23 abwechselnd miteinander verbindbar und voneinander lösbar. Hierfür sind selbsttätig arbeitende Steckkupplungen 22 vorgesehen. Am Zugrohr 18 der Schattierbahn 23 befestigte Kupplungsteile (einfahrende Kupplungsteile 22) mit Kupplungsbolzen 22e sind in korrespondierende, am Zugrohr 19 der Isolierbahn 24 befestigte Kupplungsteile (aufnehmende Kupplungsteile 22b) einfahrbar. Die einfahrenden Kupplungsteile 22 sind mit den aufnehmenden Kupplungsteilen 22b je mit Hilfe eines im Kupplungsbolzen 22e drehbar gelagerten Riegels 22h verriegelbar. Der Riegel 22h ist von einem im Kupplungsbolzen angeordneten Schrittschaltwerk steuerbar. Wie insbesondere aus den Figuren 4-7 ersichtlich, umfaßt das Schrittschaltwerk einen den Kupplungsbolzen 22e umschließenden, relativ zu diesem und entgegen der Wirkung einer Feder (zeichnerisch nicht dargestellt) verschiebbaren Schaltring 22f. Der Schaltring 22f trifft auf das den Kupplungsbolzen 22e aufnehmende Kupplungsteil 22b auf, bevor dieser Kupplungsbolzen seine Endstellung erreicht hat. Dadurch ergibt sich eine Relativbewegung zwischen Schaltring 22f und Kupplungsbolzen 22e, in deren Verlauf die den Schaltring belastende Feder vorgespannt wird. Die genannte Relativbewegung ist mittels eines am Schaltring 22f befestigten und an einem Schaltprofil 22h' des Riegels 22h angreifenden Federbügels 22k in eine Verschwenkung des Riegels 22h umsetzbar. Der Zentriwinkel der Verschwenkung beträgt bei jedem Schaltschritt 90°. Das quadratische Schaltprofil 22h' ist an die Achse 22h'' des Riegels 22h angeformt. Die Schenkel des Federbügels 22h liegen an einander gegenüberliegenden parallelen Seiten des nach Art eines Malteserkreuzes arbeitenden Schaltprofils 22h' an. Während einer der beiden Schenkel des Federbügels 22k ständig an einer Seite des Schaltprofiles 22h anliegt, hintergreift der andere Schenkel das Schaltprofil 22h' mit einem abgewinkelten Ende. Bei jedem Schaltschritt liegt das abgewinkelte Ende kurzfristig mit seiner Stirnseite unter Vorspannung des Schenkels an der Seite des Schaltprofils 22h' an, wie aus Fig. 6 erkennbar. Nach vollzogenem Schaltschritt wird der Federbügel 22k von der den Schaltring 22f belastenden Feder aus der Zwischenstellung gemäß Fig. 6 in die Endstellung gemäß Fig. 7 überführt. Bei jedem Schaltschritt wird der Riegel 22h gleichsinnig verschwenkt, und zwar abwechselnd in eine Riegelstellung (Fign. 4, 5) und in eine entriegelte Position (Fign. 6, 7). Die an einem der beiden Zugrohre 18, 19 befestigten, aufnehmenden Kupplungsteile 22b bestehen je aus einem Winkelprofil. Der vertikale Schenkel des Winkelprofils weist eine dem Querschnitt des Kupplungsbolzens 22e des einfahrenden Kupplungsteiles 22a entsprechende Aufnahmeöffnung auf. Für das Gewächshaus ist eine einzige Antriebseinrichtung 13, 14 vorgesehen. Diese ist an einer Giebelseite des Gewächshauses festgelegt. Die Antriebseinrichtung umfaßt eine Wickelwalze 14. Die Trumme jedes Zugelementes 13 sind an dieser Wickelwalze befestigt. Daher wird bei Drehung der Wickelwalze 14 jeweils ein Trumm jedes Zugelementes 13 aufgewickelt, während das andere Trum abgewickelt wird. Die Drehrichtung der Wickelwalze 14 ist umkehrbar. Die Kupplungsverbindung ist somit durch das Auftreffen des Zugrohres 18 der sich entfaltenden Schattierbahn 23 auf das Zugrohr 19 der zusammengefalteten Isolierbahn 24 herstellbar. Unmittelbar vor dem Zugrohr 19 der zusammengefalteten Isolierbahn 24 sind willkürlich außer Betrieb setzbare Endschalter vorgesehen (zeichnerisch nicht dargestellt), durch welche die in Abhängigkeit von der Intensität der Sonneneinstrahlung gesteuerte Entfaltungsbewegung der Schattierbahn 23 abgestoppt wird, bevor das Zugrohr 18 der Schattierbahn 23 auf das Zugrohr 19 der Isolierbahn 24 auftrifft. Dadurch ist sichergestellt, daß während des Schattierbetriebes keine unerwünschte Kupplungsverbindung erfolgt, welche eine nicht zeitgerechte teilweise Entfaltung der Isolierbahn zur

- 6 -

zur Folge hätte.

0175957

Bei der zeichnerisch dargestellten Steckkupplung (Fign.4-7) erfolgt die Kupplungsverbindung und die Kupplungslösung mit den gleichen Schalt- und Steuerelementen bei gleicher räumlicher Position mittels einer extrem einfachen und funktionssicheren Steckkupplung von hoher Lebensdauer.

Es sind aber auch andere Kupplungen brauchbar. Die Kupplungsverbindung und die Kupplungslösung können von unterschiedlichen Organen herbeigeführt sein und in unterschiedlicher räumlicher Position erfolgen. So kann z.B. die Kupplungslösung durch stationäre Anschläge bei einer Stellung der Zugrohre 18, 19, erfolgen, in welcher die Schattierbahn 23 zusammengefaltet ist und die Isolierbahn 24 sich in der letzten Phase der Entfaltung befindet. Soll die Isolierbahn danach zusammengefaltet werden, so wird die Schattierbahn mit Hilfe der Antriebseinrichtung entfaltet und schiebt dabei die entkuppelte Isolierbahn 24 vor sich her.

Es ist auch relativ einfach, die Kupplungsverbindung und Kupplungslösung mit Hilfe elektromagnetisch betätigter Riegel zu bewirken. Diese werden dann zweckmässigerweise senkrecht zur Bewegung der Schattierbahn 23 geführt. Sie können durch Endschalter oder durch willkürliches Schließen des Stromkreises bzw. durch Funk gesteuert werden. Aus Gründen der Übersichtlichkeit ist Aufbau und Arbeitsweise der Vorrichtung anhand nur einer einzigen Schattierbahn 23 und einer einzigen Isolierbahn 24 zeichnerisch dargestellt und erläutert. Eine solche Anordnung ist im Extremfall möglich. Im Regelfall wird man jedoch jedem durch Querbinder begrenzten Längssektor bzw. Längsabschnitt des Gewächshauses eine Schattierbahn 23 und eine Isolierbahn 24 anordnen. Im Bereich der Querbinder sind Querdrähte gespannt, die sich von einer Längswand des Gewächshauses zur anderen Längswand erstrecken und senkrecht zu dieser stehen. An diesen Drähten kann sowohl die Schattierbahn 23 als auch die Isolierbahn 24 fest angeschlossen sein, um je in den Raum des benachbarten Binderfaches entfaltet zu werden. In dem ersten bzw. letzten Längssektor des Gewächshauses, das je von der Giebelseite begrenzt ist, ist die Schattierbahn 23 bzw. die Isolierbahn 24 je an einem Skelettelement 10 bzw. 11 der zugehörigen Wand angeschlossen.

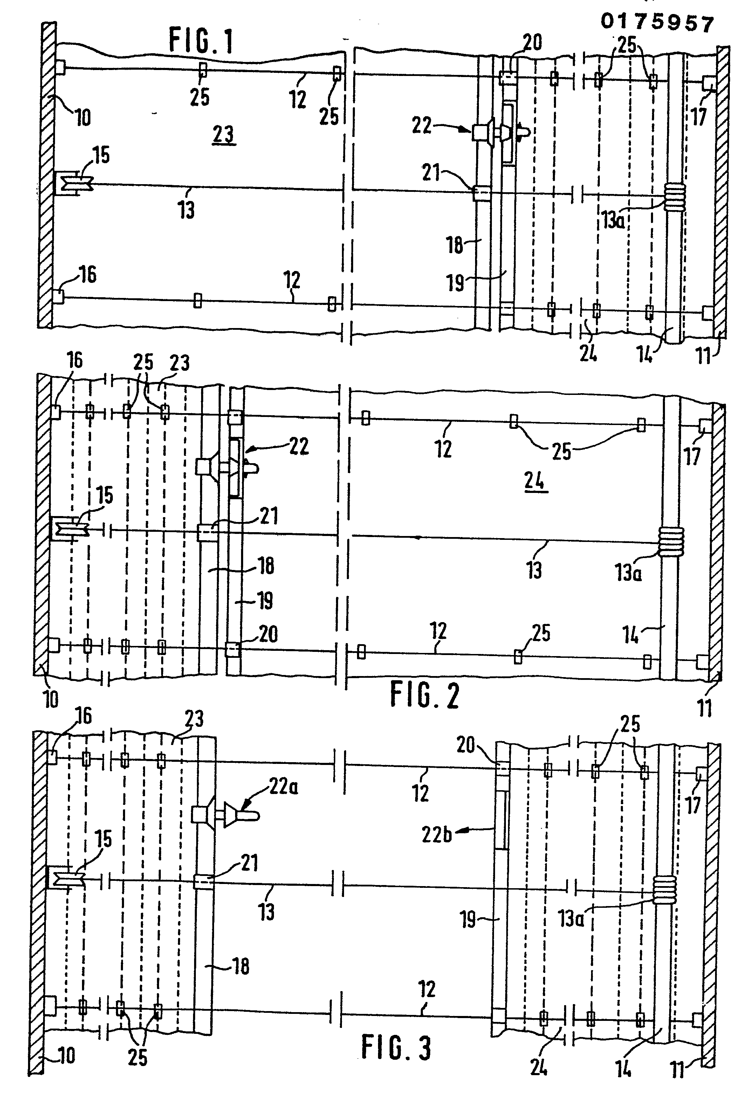

Um von einer Abdeckung des Vegetationsraumes gemäß Fig. 1 in eine Abdeckung gemäß Fig. 2 zu kommen, wird die Schattierbahn 23 mit Hilfe der Antriebseinrichtung 14, 13 zusammengefaltet, wobei die angekuppelte Isolierbahn 24 durch passives Mitführen entfaltet wird. Die Abdeckstellung gemäß Fig. 3 wird dadurch erreicht, daß durch Betätigung der Antriebseinrichtung bei umgekehrter Drehrichtung der Wickelwalze 14 die Schattierbahn 23 entfaltet wird und die angekuppelte oder bereits abgekuppelte Isolierbahn zusammengefaltet wird. Beim Auftreffen des Zugrohrs 18 auf das Zugrohr 19 ergibt sich durch eine Relativbewegung zwischen Schaltring 22f und Schaltbolzen 22e eine Entriegelung. Bei dieser Relativbewegung wird die den Schaltring 22f belastende Feder vorgespannt, um diesen Schaltring nach vollzogener Kupplungslösung wieder in Ausgangsposition zurückführen zu können. Nach vollzogener Entriegelung wird die Schattierbahn 23 durch Umkehr der Drehrichtung der Wickelwalze 14 in eine zusammengefaltete Position gemäß Fig. 3 geschoben, während die Isolierbahn 24 in zusammengefalteter Stellung verbleibt. Anstelle von seilartigen sind ohne weiteres auch starre Tragelemente 12 verwendbar.

Es ist bekannt, bei wechselnder Sonneneinstrahlung die Schattierbahnen 23 in Abhängigkeit von der Einstrahlungsintensität zu steuern. Die Schattierbahnen werden dabei je nach zu- oder abnehmender Einstrahlung in höherem Grade entfaltet bzw. in höherem Grade zusammengefaltet. Die oben erwähnten Endschalter, welche die bei einem solchen Schattierbetrieb erfolgenden Schaltbewegungen vor einem Auftreffen der Zugrohre 18 auf die Zugrohre 19 begrenzen, sind willkürlich außer Betrieb setzbar, wenn zum Beispiel bei Anbruch der Nacht die Isolierbahnen entfaltet werden sollen. Für die Isolierbahnen und Schattierbahnen des Gewächshauses sind mindestens zwei parallele seilartige Tragelemente 12 vorgesehen, die an ihren Enden mit Hilfe von Verbindungselementen 17 bzw. Spannelementen 16 an die Wände des Gewächshauses angeschlossen sind. Um eine gleichmäßige Bewegung der Bahnen beim Zusammenfalten und Entfalten zu gewährleisten, sind mindestens zwei Zugseile 13 vorgesehen. Wie die Kupplungsteile 22a und 22b an den Zugrohren 18, 19 mit Hilfe von Haltestücken 22c bzw. 22e befestigt sind, ergibt sich aus Fig. 4.

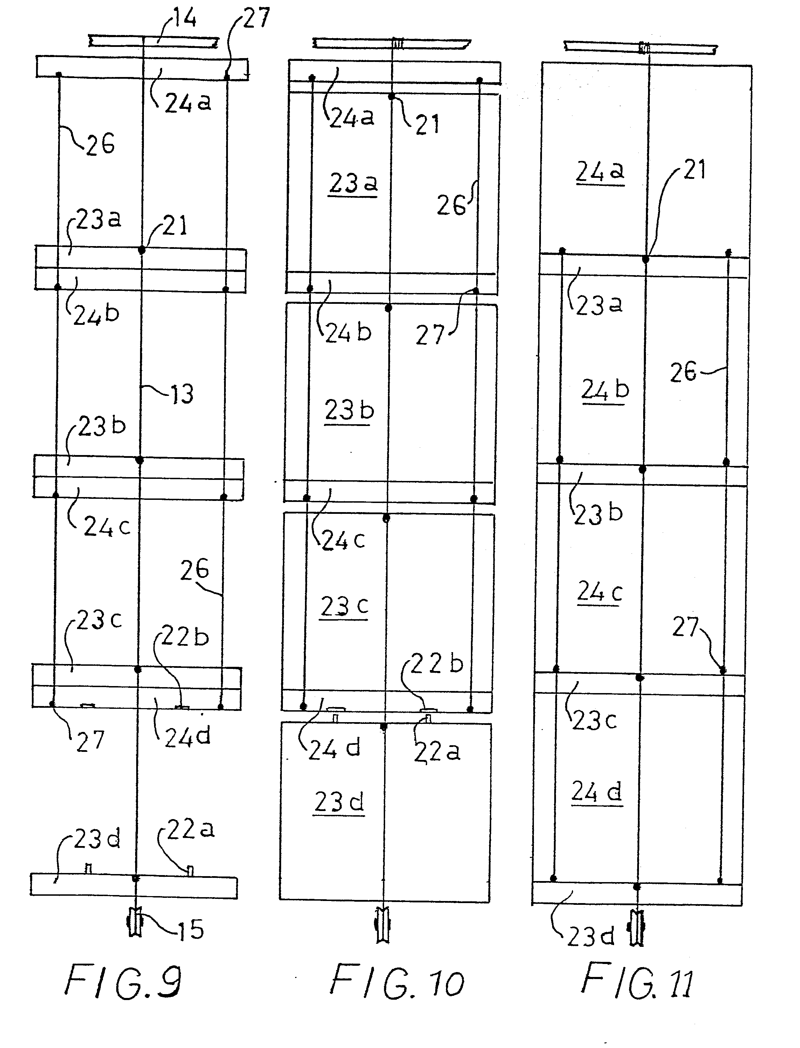

In der Regel sind Gewächshäuser in mehrere durch Querbinder bestimmte Längsabschnitte unterteilt. Demzufolge ist die Schattierbahn 23 ebenfalls in der Regel in eine entsprechende Anzahl von Abschnitten (Schattierbahn-Abschnitten 23a-23d) aufgeteilt. In gleicher Weise ist die Isolierbahn 24 in entsprechende Abschnitte (Isolierbahn-Abschnitte 24a-24d) aufgeteilt. Trotz der Aufteilung bleibt sowohl die Schattierbahn 23 als auch die Isolierbahn 24 je als Bewegungseinheit erhalten. Denn die Schattierbahn-Abschnitte sind durch die Zugseile 13 zur Bewegungseinheit verbunden, welche Zugseile je am Zugrohr eines jeden Schattierbahn-Abschnittes 23a-23d angreifen. Die Isolierbahn-Abschnitte 24a-24d sind dadurch zu einer Bewegungseinheit verbunden, daß, wie aus den Figuren 9-11 ersichtlich, Verbindungsseile 26 vorgesehen sind, welche die Zugrohre 19 dieser Isolierbahn-Abschnitte miteinander verbinden. Man kann daher die auf Seite 7 beschriebenen Abdeckpositionen zur Schattierung bzw. zur Isolierung bzw. für einen offenen Vegetationsraum dadurch herstellen, daß ausschließlich zwei benachbarte Zugrohre 18,19 mit Kupplungen 22 ausgerüstet und dadurch zeitgerecht miteinander verbindbar und voneinander lösbar sind. Der Aufwand für die Kupplungen ist daher relativ gering, da bei ausreichender Festigkeit vielfach zwei Kupplungen zum Verbinden bzw. Lösen der Schattierbahn 23 mit der bzw. von der Isolierbahn 24 ausreichen, auch wenn die genannten Bahnen in zahlreiche Abschnitte aufgeteilt sind. Im Schema der Figur 8 ist der Vegetationsraum offen. In den Schematas der Figuren 10 und 11 ist der Vegetationsraum durch die Schattierbahn bzw. durch die Isolierbahn abgedeckt. Um vom offenen Vegetationsraum gemäß Figur 9 zum schattierten Vegetationsraum gemäß Figur 10 zu kommen, werden die Zugseile 13 (im Schema nur ein einziges dargestellt) mit Hilfe der motorischen Antriebseinrichtung durch Drehen der Wickelwalze 14 gemeinsam in Deckposition gezogen. Diese Deckposition ist in Figur 10 noch nicht völlig erreicht, wie aus dem Schema der Figuren 9 bis 11 zu ersehen; denn die Kupplungsverbindung zwischen den Zugrohren 18,19 des Schattierbahn-Abschnittes 23d und des Isolierbahn-Abschnittes 24d vollzieht sich in der allerletzten Phase der Abdeckbewegung. Ist die Kupplungsverbindung hergestellt, kommt man von einem schattierten Vegetationsraum gemäß Figur 10 zu einem thermisch isolierten Vegetationsraum gemäß Figur 11 dadurch, daß die Wickelwalze 14 bei umgekehrter Drehrichtung angetrieben wird. Dadurch werden die Schattierbahn-Abschnitte 23a-23d zusammengefaltet, d.h. in eine Position gemäß Fig. 11 überführt. Gleichzeitig werden die mit Hilfe der Verbindungsseile 26 zu einer Bewegungseinheit verbundenen Schattierbah-Abschnitte 24a-24d in Abdeckposition entfaltet, da diese Bewegungseinheit über ihren Isolierbahn-Abschnitt 24d an den Schattierbahn-Abschnitt 23d angekuppelt ist. Um von der Deckposition gemäß Figur 11 zu einem offenen Vegetationsraum gemäß Figur 9 zu kommen, ist es zunächst erforderlich, eine Abdeckposition gemäß Figur 10 herbeizuführen, danach ist die Kupplungsverbindung zwischen dem Schattierbahn-Abschnitt 23d und dem Isolierbahn-Abschnitt 24d zu lösen, um danach die Schattierbahn-Abschnitte 23a-23d zusammezufalten. In den Figuren 9-11 sind der Übersichtlichkeit wegen die Zugrohre 18,19 an den Isolierbahn-Abschnitten 24a-24d und den Schattierbahn-Abschnitten 23a-23d weggelassen, obwohl die Zugseile 13 über Befestigungselemente 21 an den Zugrohren 18 der Schattierbahn-Abschnitte 23a-23d und die Verbindungsseile 26 über Verbindungselemente 27 an den Zugrohren der Isolierbahn-Abschnitte 24a-24d angreifen. Bei willkürlicher Steuerung der Kupplungen kann die Kupplungsverbindung in jeder beliebigen Position hergestellt bzw. gelöst werden. Auf diesem Wege kann zum Beispiel eine Abdeckposition entsprechend Figur 3 ausgehend von einer zusammengefalteten Isolierbahn und einer zusammengefalteten Schattierbahn wie folgt herbeigeführt werden: Die Isolierbahn 23 wird entfaltet bis ihr Zugrohr 18 am Zugrohr 19 der zusammengefalteten Isolierbahn anliegt, sodann wird die Kupplungsverbindung willkürlich bewirkt, danach wird durch gegensätzlichen Antrieb der allein antreibbaren Isolierbahn 23 die Isolierbahn partiell entfaltet, wie in Figur 3, rechte Hälfte, dargestellt. Danach wird die Kupplungsverbindung zwischen den beiden Zugrohren 18,19 willkürlich gelöst und die Zusammenfaltungsbewegung der Schattierbahn fortgesetzt, bis eine Position gemäß Figur 3, rechte Hälfte erreicht ist.

In jedem Falle ist jegliche Bewegung der antriebslosen Isolierbahn nur mit Hilfe der antreibbaren Schattierbahn steuerbar, was die Kuppelbarkeit der beiden Zugrohre 18,19 voraussetzt.

Bei der manuell betätigbaren Kupplung gemäß Fig. 8 ist die Verbindung zwischen den Zugrohren 18, 19 mittels Haken 27 herstellbar, die mit Hilfe einer Achse 26 schwenkbar sind. Die Achse 26 ist in einem Lagerteil 22c' des Verbindungsstückes 22c begrenzt schwenkbar gelagert. Eine Reihe von Haken 27, die im gleichen gegenseitigen Abstand an der Achse 26 befestigt sind, durchgreifen über Schlitze die Wandung des muffenartigen Lagerteils 22c' und hintergreifen mit abgebogenen freien Enden in Kupplungsposition das Verbindungsstück 22i am Zugrohr 19. Zum Verschwenken der Achse 26 unter Herstellung und Lösung der Kupplung überragt die Achse 26 die Stirnkante des Lagerteils 22c. Im überragenden Abschnitt ist ein Handgriff für die Verschwenkung der Achse und damit der Haken 27 in und außer Kupplungsposition angeordnet. Insoweit handelt es sich bei der Kupplung 22' gewissermaßen um eine lösbare Hakenverbindung.

0175957

Patentansprüche

1. Vorrichtung zur Schattierung und Wärmedämmung in einem Gewächshaus mit wenigstens zwei folienartigen oder aus plattenartigen Elementen zusammengesetzten, in Falten legbaren, den Vegetationsraum alternativ abdeckenden, je rückseitig (Anschlußseite) an einem stationären Element des Gewächshauses festlegbaren und stirnseitig mit einem Zugrohr armierten Bahnen, von welchen die eine, primär der Schattierung dienende Bahn (Schattierbahn) luftdurchlässig und die andere primär der Wärmedämmung dienende Bahn (Isolierbahn) luftundurchlässig ist,
mit die Schattierbahn und die Isolierbahn gemeinsam halternden und führenden, von Anschlußseite zu Anschlußseite ausgespannten seilartigen Tragelementen,
sowie mit seilartigen je über wenigstens eine Rolle geführten, an wenigstens einem Zugrohr angreifenden, motorisch antreibbaren Zugelementen zum Zusammenfalten bzw. Entfalten der zugehörigen Bahn,
dadurch gekennzeichnet, daß das Zugrohr (18) der Schattierbahn (23) und das Zugrohr (19) der mittels der antreibbaren Schattierbahn (23) unter passiver Mitführung zusammenfaltbaren und entfaltbaren Isolierbahn (24) mittels Kupplungen ( 22 ) abwechselnd miteinander verbindbar (Kupplungsverbindung) und voneinander lösbar (Kupplungslösung) sind.

2. Vorrichtung nach Patentanspruch 1, dadurch gekennzeichnet, daß die Kupplungsverbindung durch das Auftreffen des Zugrohres (18) der sich entfaltenden Schattierbahn (23) auf das Zugrohr (19) der zusammengefalteten Isolierbahn (24) mittels in Abhängigkeit von der Bewegung der Schattierbahn (23) selbsttätig arbeitender Steckkupplungen (22,24) herstellbar ist.

3. Vorrichtung nach Patentanspruch 2, dadurch gekennzeichnet, daß unmittelbar vor dem Zugrohr (19) der zusammengefalteten Isolierbahn (24) willkürlich außer Betrieb setzbare Endschalter vorgesehen sind, durch welche die in Abhängigkeit von der Intensität der Sonneneinstrahlung gesteuerte Entfaltungsbewegung der Schattierbahn (23) abgestoppt wird, bevor das Zugrohr (18) der Schattierbahn (23) auf das Zugrohr (19) der Isolierbahn (24) auftrifft.

4. Vorrichtung nach einem der vorhergehenden Patentansprüche, dadurch gekennzeichnet, daß die Zugrohre (18,19) mittels (zeichnerisch nicht dargestellter) Steckkupplungen beim Auftreffen des Zugrohres (18) der sich entfaltenden Schattierbahn (23) auf das Zugrohr (19) der zusammengefalteten Isolierbahn (24) die Kupplungsverbindung eingehen und daß die Kupplungslösung mittels stationärer Anschläge bei einer Stellung der Zugrohre (18,19) erfolgt, in welcher die Schattierbahn (23) zusammengefaltet ist und sich die Isolierbahn (24) in der letzten Phase der Entfaltung befindet.

5. Vorrichtung nach Patentanspruch 1 oder 2, dadurch gekennzeichnet, daß die Kupplungsverbindung und die Kupplungslösung mit Hilfe elektromagnetisch betätigbarer, etwa senkrecht zur Bewegung der Schattierbahn geführter Riegel bewirkt ist.

6. Vorrichtung nach Patentanspruch 5, dadurch gekennzeichnet, daß die Riegel durch Endschalter steuerbar sind.

7. Vorrichtung nach einem der vorhergehenden Patentansprüche, dadurch gekennzeichnet, daß in den durch Querbinder bestimmten Längsabschnitten des Gewächshauses je eine antreibbare Schattierbahn (23) und eine zugeordnete passiv mitführbare Isolierbahn (24) angeordnet sind.

8. Vorrichtung nach einem der Patentansprüche 1-3,7, dadurch gekennzeichnet, daß an den Zugrohren (18)der Schattierbahn (23) befestigte Kupplungsteile ( einfahrende Kupplungsteile 22a) mit Kupplungsbolzen (22e) in korrespondierende, an den Zugrohren (19) der Isolierbahn (24) befestigte Kupplungsteile (22b) einfahrbar sind, wobei die einfahrenden Kupplungsteile (22a) mit den aufnehmenden Kupplungsteilen (22b) je mit Hilfe eines im Kupplungsbolzen (22e) drehbar gelagerten Riegels (22h) verriegelbar sind, der von einem im Kupplungsbolzen angeordneten Schrittschaltwerk steuerbar ist ( Fig.4).

9.Vorrichtung nach einem der vorhergehenden Patentansprüche, dadurch gekennzeichnet, daß im Falle eines Gewächshauses, das in mehrere, durch Querbinder bestimmte Längsabschnitte unterteilt ist, die in entsprechende Abschnitte ( Schattierbahn-Abschnitte 23a-23d) aufgeteilte Isolierbahn (24) über ein einziges Zugrohr ( 18) der Schattierbahn und über ein einziges Zugrohr (19) der Isolierbahn mittels der Kupplungen (22) miteinander verbindbar sind (Bp. der Fig.8-10).

10.Vorrichtung nach Patentanspruch 9, dadurch gekennzeichnet, daß die Schattierbahn-Abschnitte (23a-23d) durch die am Zugrohr jedes dieser Schattierbahn-Abschnitte angreifenden Zugseile (13) und die Isolierbahn-Abschnitte (24a-24d) durch Verbindungsseile (26) miteinander zu einer Bewegungseinheit verbunden sind, welche Verbindungsseile (26) an den Zugrohren (19) der Isolierbahn- Abschnitte (24a- 24d) angreifen.

11. Vorrichtung nach einem der vorhergehenden Patentansprüche, dadurch gekennzeichnet, daß als Kupplungen (22') eine manuell betätigbare Hakenverbindung vorgesehen ist, deren Haken (27) gemeinsam mittels einer im Verbindungsstück (22c) der Schattierbahn (23) gelagerten Achse (26) in Hintergriffsposition verschwenkbar sind, bei welcher sie das Verbindungsstück (22i) der Isolierbahn (24) hintergreifen.

1 / 4

0175957

FIG.1

FIG.2

FIG.3

0175957

FIG. 4

FIG. 5

FIG. 6

FIG. 7

0175957

FIG. 8

FIG.9

FIG.10

FIG.11